# EUROPEAN PATENT SPECIFICATION

(11) **EP 4 599 320 B1**
(45) Date of publication and mention of the grant of the patent: **15.07.2026**
(21) Application number: 23765535.2
(22) Date of filing: 12.09.2023
(51) Int. Cl.: G06F 3/04886, G06F 3/023, G06F 3/0487, G06F 3/04883, G09B 21/02

(54) **METHOD AND DEVICE FOR CAPTURING A NUMERICAL CODE**
VERFAHREN UND VORRICHTUNG ZUR ERFASSUNG EINES NUMERISCHEN CODES
PROCÉDÉ ET DISPOSITIF DE SAISIE D'UN CODE NUMÉRIQUE

(30) Priority: 07.10.2022 EP 22306507
(43) Date of publication of application: 13.08.2025
(73) Proprietor: THALES DIS FRANCE SAS, 92190 Meudon (FR)
(72) Inventor: FOESSER, Christophe, 13705 La Ciotat (FR); PALADJIAN, Pierre, 13705 La Ciotat (FR)
(74) Representative: Grevin, Emmanuel
(86) International application number: PCT/EP2023/075014
(87) International publication number: WO 2024/074267

(56) References cited:
- WO-A1-2012/045844
- CN-A- 109 979 286
- US-A1- 2002 069 068
- US-A1- 2014 181 722

## Description

### (Field of the invention)

The present invention relates to portable devices and methods for capturing a numerical code. It relates particularly to methods of capturing numerical codes on portable devices intended to be used by visually impaired people.

### (Background of the invention)

During some secured treatments or transactions, visually impaired people may need to enter a secret value (like their PIN code) directly on their personal device.

The document WO200184808 A2 proposes a method based on a specific apparatus for facilitating use of a mobile station by a visually impaired user.

The document WO201245844 A1 describes a specific device equipped with a touch-sensitive surface for logging data in Braille.

The document US10429930 B2 describes a tactile strip coupled to a touchscreen display.

The document US2014/0181722 A1 describes an input method on a device including a touch screen display.

### (Summary of the Invention)

There is need to enhance the way to securely type a numerical value on a portable device suitable for visually impaired people.

The invention aims at solving the above-mentioned technical problem.

An object of the present invention is a device for capturing a numerical code. The device comprises a touch sensor that is configured to handle six separate sensing areas numbered according to the Braille matrix. The device comprises a detector engine configured to detect a plurality of sequential taps on said sensing areas, to identify which symbol of the Antoine notation corresponds to the plurality of taps, and to capture a digit corresponding to the identified symbol. The detector engine is configured to interpret tapping on the sensing area number six both as a part of said identified symbol and as an order validating the entry of said identified symbol.

Advantageously, the detector engine may be configured to consider that an even number of taps on a target sensing area among the sensing areas number one to five to be equivalent to no tap on said target sensing area.

Advantageously, the numerical code may consist of a sequence of digits and the detector engine may be configured to identify a beginning and an end of the sequence of digits.

Advantageously, the detector engine may be configured to interpret the very first tap of the sensing area number six as the beginning of the sequence.

Advantageously, the detector engine may be configured to interpret a specific gesture applied to the touch sensor as the beginning of the sequence.

Advantageously, the detector engine may be configured to interpret a start of a waiting phase for detecting touched sensing areas as the beginning of the sequence.

Advantageously, the detector engine may be configured to interpret tap on the sensing area number six directly subsequent to an entered digit as the end of the sequence.

Advantageously, the detector engine may be configured to detect a specific gesture applied to the touch sensor and to interpret the specific gesture as the end of the sequence.

Advantageously, the detector engine may be configured to interpret a tap on the sensing area number six greater than a preset time as the end of the sequence.

Advantageously, the detector engine may be configured to interpret a double tap on the sensing area number six as the end of the sequence.

Advantageously, the detector engine may be configured to count a number of entered digits and to consider that the end of sequence is reached as soon as the number of entered digits reaches a predetermined value.

Advantageously, the device may be configured so that the touch sensor faces the user who enters the numerical code.

An object of the present invention is a method for capturing a numerical code in a device comprising a touch sensor. The touch sensor is configured to handle six separate sensing areas numbered according to a Braille matrix. A detector engine of the device detects a plurality of sequential taps on said sensing areas, identifies which symbol of the Antoine notation corresponds to the plurality of taps, and captures a digit corresponding to the identified symbol. The detector engine interprets tapping on the sensing area number six both as a part of said identified symbol and as an order validating the entry of the identified symbol.

Advantageously, the numerical code may consist of a sequence of digits and the detector engine may interpret the very first tap of the sensing area number six as a beginning of the sequence of digits.

Advantageously, the numerical code may consist of a sequence of digits and the detector engine may interpret a specific gesture applied to the touch sensor as a beginning of the sequence of digits.

Advantageously, the numerical code may consist of a sequence of digits and the detector engine may interpret a start of a waiting phase for detecting touched sensing areas as a beginning of the sequence of digits.

Advantageously, the numerical code may consist of a sequence of digits and the detector engine may interpret tap on the sensing area number six directly subsequent to a entered digit as an end of the sequence of digits.

Advantageously, the numerical code may consist of a sequence of digits and the detector engine may interpret a specific gesture applied to the touch sensor as the end of the sequence of digits.

Advantageously, the numerical code may consist of a sequence of digits and the detector engine may interpret a tap on the sensing area number six greater than a preset time as an end of the sequence of digits.

Advantageously, the numerical code may consist of a sequence of digits and the detector engine may interpret a double tap on the sensing area number six as the end of the sequence of digits.

Advantageously, the numerical code consists of a sequence of digits and the detector engine may count a number of entered digits and consider that an end of sequence of digits is reached as soon as the number of entered digits reaches a predetermined value.

### (Brief description of the drawings)

Other characteristics and advantages of the present invention will emerge more clearly from a reading of the following description of a number of preferred embodiments of the invention with reference to the corresponding accompanying drawings in which:
Figure 1 shows a geometric distribution of sensing areas on a phone touch screen according to an example of the invention;
Figure 2 shows an introduction to the Antoine coding;
Figure 3 shows a number coded in Antoine notation using two symbols;
Figure 4 shows a simplified architecture diagram of a portable device according to an example of the invention;
Figure 5 shows a sequence of numbers coded according to the Antoine format and value of the resulting numeric code entered according to an example of the invention;
Figure 6 shows an exemplary flow diagram for entering a numerical value on a portable device according to an example of the invention; and
Figure 7 shows a pattern entry sequence according to an example of the invention.

### (Detailed description of the preferred embodiments)

The invention may apply to any type of device equipped with a touch screen. The invention may apply to portable devices like smartphones, Personal Digital Assistants (PDA), game consoles or portable computers for instance.

The device may use the entered numerical value for enabling, authorizing or performing a computer treatment or a transaction. For example, the typed numerical code may be required to authorize a payment transaction or to access service.

Visually impaired people may be trained to use characters and numbers expressed in Braille (also named French Braille) code.

According to the usual Braille coding, a character (or a number) is represented in a matrix of six dots spread over two columns of three raised dots. Each character is formed by a combination of one to six dots.

According to the Braille system, dots are numbered 1 to 3 from the top to bottom in the left column and 4 to 6 in the right column.

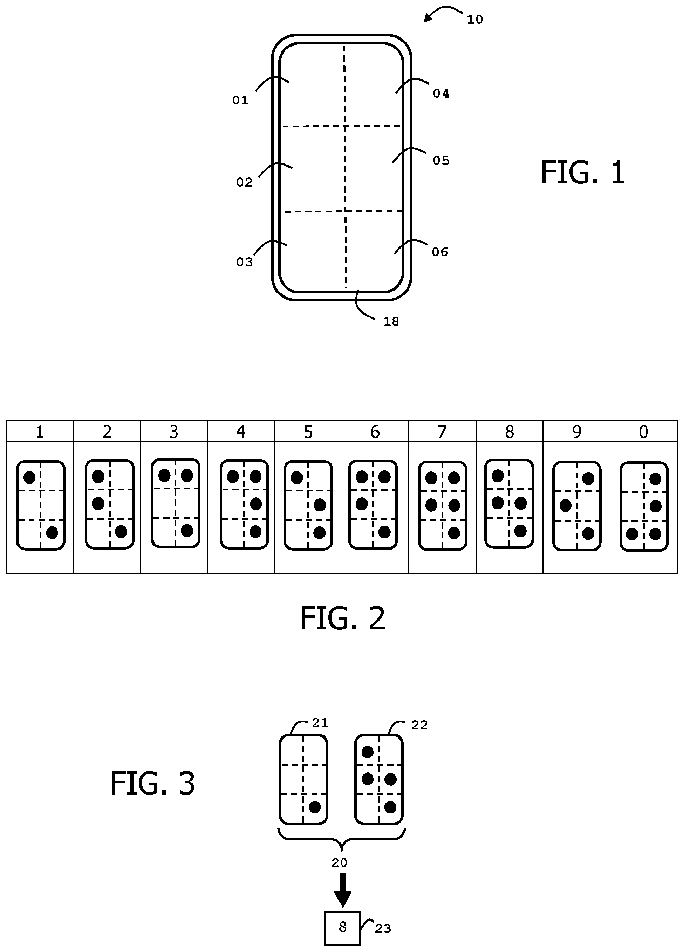

Fig. 1 depicts a geometric distribution of sensing areas on a phone touch screen according to an example of the invention.

The device 10 is a phone having a touch screen 18. The surface of the touch screen 18 is split in six separate sensing areas 01 to 06 mapping a Braille matrix. In the left column, the sensing area 01 located at the top is assigned to dot number 1, the sensing area 02 located at the middle is assigned to dot number 2 and the sensing area 03 located at the bottom is assigned to dot number 3. Similarly, in the right column, the sensing area 04 located at the top is assigned to dot number 4, the sensing area 05 located at the middle is assigned to dot number 5 and the sensing area 06 located at the bottom is assigned to dot number 6.

Fig. 2 depicts an introduction to the Antoine coding.

The Antoine format (or notation) is an evolution of the Braille format. The Antoine format uses the same six-point matrix and has been initially designed for mathematics.

Each number is coded as a specific pattern made of a combination of 2 to 5 dots.

According to the Antoine convention, a pattern corresponding to a number is supposed to be preceded by a prefix pattern (not shown at Fig. 2) in which only dot number 6 is activated. Similarly, a sequence of patterns corresponding to as many numbers is supposed to be preceded by the prefix pattern.

Fig. 3 depicts a number coded using two symbols according to the Antoine format.

The two consecutive symbols (or patterns) constitute a set 20 that encodes the numerical value (or digit) 23 equal to eight.

The first symbol 21 is the prefix pattern mentioned above. The second symbol 22 is the pattern corresponding to the number 8.

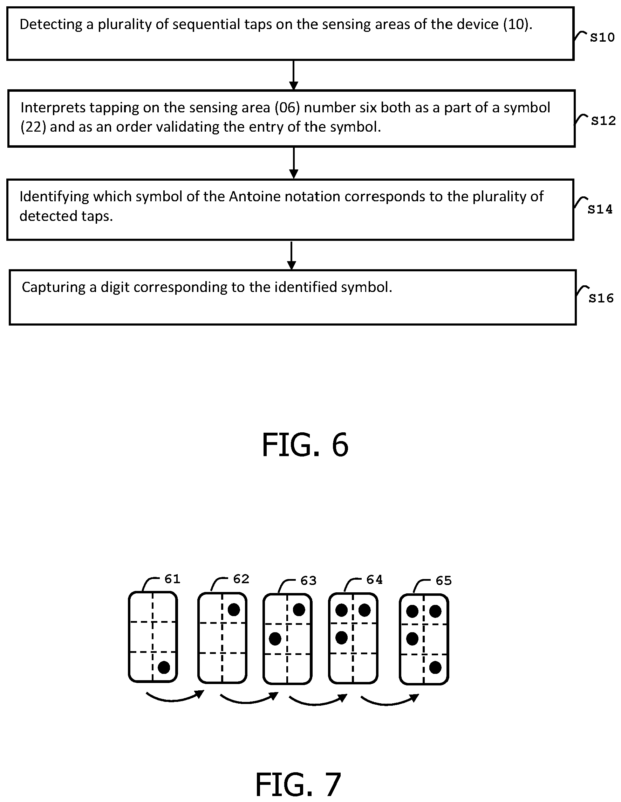

Fig. 7 depicts an entry sequence of a symbol according to an example of the invention.

In some embodiments, the device 10 comprises a detector engine that may be configured to detect a plurality of sequential taps on the sensing areas 01 to 06, to identify which symbol of the Antoine notation corresponds to the plurality of taps, and to capture the digit 23 corresponding to the identified symbol. The detector engine may be configured to interpret tapping on the sensing area number six both as a part of the entered symbol and as an order validating (i.e. finalizing) the entry of the entered symbol.

As illustrated in the example of Fig.7, in a first step 61, the user may press dot number 6 to enter the prefix pattern in the device 10. The device may display (or not) the dot number 6 on the touch screen 18. Then the device 10 may automatically reset the matrix (it may erase from the touch screen 18 the previously displayed dot if any) and the user may start entering the symbol corresponding to the number six. At step 62, the user may press dot number 4. Then at step 63, the user may press dot number 2. It is to be noted that at this stage the second symbol is still not validated. Then at step 64, the user may press dot number 1. Then at step 65, the user may press dot number 6 which completes the pattern corresponding to the numerical value 6. At this stage, the second symbol is validated. The device 10 interprets pressing on dot number 6 as both entering a part of the second pattern and validating the entry of the second pattern. Thus, pressing on dot number 6 allows finalizing the typing of the symbol. At the end the entry sequence of the symbol, the device captured the numerical value 6. It can be noted that dots 1, 2 and 4 may be touched in any order.

In some embodiments, user can omit step 61 when the device 10 is configured not to wait for the entry of the prefix pattern.

In some embodiments, the detector engine may be configured to consider that an even number of taps on a target sensing area among the sensing areas number one to five to be equivalent to no tap on this target sensing area. Thus, the user of the device 10 can make an input correction before validation of the entered pattern.

Preferably, the entered numerical code consists of a sequence of more than one digit and the detector engine is configured to identify the beginning and the end of the sequence of digits.

In some embodiments, the detector engine may be configured to interpret the very first tap of the sensing area number six as the beginning of the sequence of digits. In this case, the beginning of the sequence of digits corresponds to the typing of the prefix pattern.

In some embodiments, the detector engine may be configured to interpret a specific gesture applied to the touch sensor as the beginning of the sequence. The detector engine can be pre-set to consider that simultaneous presses on sensing areas 1 and 3 signify the beginning of the sequence of digits, for example.

The detector engine can be pre-set to consider that a sweep from the top to bottom or from right to left on two or more sensing areas signifies the beginning of the sequence of digits.

In some embodiments, the detector engine may be configured to interpret a start of the waiting phase for detecting touched sensing areas as the beginning of the sequence of digits. In other words, the beginning of the sequence can be implicit when the device knows that the user is going to enter a numerical value.

In some embodiments, the detector engine may be configured to interpret tap on the sensing area number six directly subsequent to a validated (entered) digit as the end of the sequence.

In some embodiments, the detector engine may be configured to detect a specific gesture applied to the touch sensor as the end of the sequence. For instance, the device 10 may interpret a sweep from the bottom to the top on two or more sensing areas as the end of the sequence of entered digits.

In some embodiments, the detector engine may be configured to interpret pressing or tapping on sensing area number six greater than a preset time as the end of the sequence. For instance, the detector engine can interpret pressing the sensing area number six for two seconds or more (i.e. a long tap) as the end of entire numerical value entry.

In some embodiments, the detector engine may be configured to interpret a double tap on the sensing area number six as the end of the sequence.

Preferably, the detector engine may be configured to count the number of entered digits and to consider that the end of sequence is reached as soon as the number of entered digits reaches a predetermined value. For instance, the detector engine may know the length of the PIN code supposed to be typed by the user and automatically detect the end of the sequence as soon as the user has entered the last digit of the PIN code.

In some embodiments, the detector engine may be configured to accept simultaneous taps on sensing areas number 1 to 5 for building a symbol and to reject simultaneous taps of both sensing area number 6 and any other sensing area.

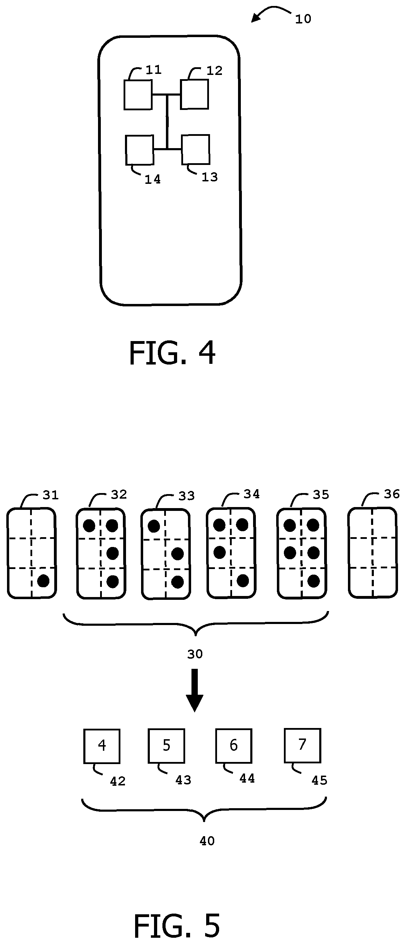

Fig. 5 shows a sequence of numbers coded according to the Antoine format and the value of the resulting numeric code entered according to an example of the invention.

In this example, the prefix symbol is typed at step 31 to indicate the beginning of the sequence of digits.

Then the user enters the first digit of the sequence encoded according to the Antoine format at step 32. Typing of each digit can be performed according to the flow illustrated in Fig. 7 (entering of the prefix pattern being supposed to be done only once at step 31)) Then the user progressively enters the second, third and fourth digits of the sequence encoded according to the Antoine format during steps 33 to 35. As described above, the device 10 detects the end of the sequence either during step 35 or during an additional step 36 (shown as a blank matrix) .

Each time an entry of a digit is validated (by pressing sensing area number 6), the device 10 identifies the entered symbol and deduces the corresponding number entered by the user. In the example depicted at Fig. 5, the first typed digit 42 has a value equal to "4", the second typed digit 43 has a value equal to "5", the third typed digit 44 has a value equal to "6" and the fourth typed digit 45 has a value equal to "7". AT the end of the process, the device 10 captured the entered numerical value 40 equal to "4567".

Fig. 4 shows a simplified architecture diagram of a portable device according to an example of the invention.

The portable device 10 is a hardware apparatus comprising a hardware processor 12, a non-volatile memory 13 and a detector engine 11. Preferably, the portable device 10 may further comprise a physical communication interface 14 configured to exchange data with another appliance.

The detector engine 11 may be implemented as a full hardware unit, a dedicated firmware or a combination thereof. In a preferred embodiment, the non-volatile memory 13 comprise a set of program instructions that are executed by the processor 12 to perform features of detector engine 11 as described above.

Fig. 6 shows an exemplary flow diagram for entering a numerical value (i.e. a numerical code) on a portable device according to an example of the invention.

The device comprises a detector engine and a touch sensor and is configured to handle six distinct sensing areas numbered according to a Braille matrix. The detector engine detects a plurality of sequential taps on the sensing areas at step S10. Then the detector engine interprets tapping on the sensing area number six both as a part of the identified (entered) symbol and as an order validating (i.e. finalizing) the entry of the identified symbol at step S12.

Then the detector engine identifies which symbol of the Antoine notation corresponds to the plurality of taps at step S14. Then the detector engine captures the digit (i.e. number) corresponding to the identified symbol (also named pattern) at step S16.

In some embodiments, once the device has captured an entire numerical code (for instance a PIN code value of 4 or 6 digits), it may send the captured numerical code to another machine for treatment. For instance, a smartphone may send the entered numerical code to a Point-Of-Sale terminal for contributing to a payment transaction.

In some embodiments, the device may send to another machine each digit as soon as it captures it. In other words, the device may send a captured digit before capturing the entire numerical code.

Preferably, the touch sensor may face the user who enters the numerical code. Thanks to this embodiment, the user can place the touch screen against them so that it is hardly (or even not at all) visible to people present nearby. This allows a better protection of sensitive data compared to already known methods.

In some embodiments, the touch sensor can be an invisible overlay or a virtual display.

Preferably, the touch sensor may display only one matrix so that the user can press all sensing areas of the matrix using thumb (or fingers) of the hand carrying the device. This embodiment allows a better protection of sensitive data since the user can keep the device hidden in their pocket or in a bag. Furthermore, the other hand remains free for other tasks.

In some embodiments, the device 10 may provide a feedback directly to the user to indicate which digit it has captured. For instance, the device 10 may provide an audio signal via headphones connected to the device in wired or wireless mode. Alternatively, the device may vibrate to provide the feedback.

In some embodiments, the device may display a dot on a sensing area if it detects a valid tap (I.e. odd number of presses) on this area as illustrated in Fig. 7 for instance.

Preferably, the device may leave the touch screen blank even if it detects a valid tap on a sensing area of the matrix. By doing so, confidentiality of sensitive data is preserved since no trace of the digit entered is visible to a nearby observer.

Although the method has been described for a mobile handset, some embodiments of the invention may apply to other types of device. For example, the device may be a dedicated input device or a PDA. In some embodiments, the invention may apply to a laptop, Point-Of-Sale terminal or an Automated Teller Machine (ATM).

Thanks to some embodiments of the invention, the user can type the required numerical value in a direct, fluent, easy and quick manner. In particular, the user does not have to wait for a series of suggestions from the device.

The invention is not limited to the described embodiments or examples. In particular, the described examples and embodiments may be combined.

## Claims

1. A device (10) for capturing a numerical code (40), said device comprising a touch sensor (18),
wherein the touch sensor is configured to handle six separate sensing areas (01, ..., 06) numbered according to the Braille matrix;
wherein the device comprises a detector engine (11) configured to detect a plurality of sequential taps on said sensing areas, to identify which symbol (22) of the Antoine notation corresponds to said plurality of taps, and to capture a digit (23) corresponding to said identified symbol (22);
**characterised in that**
the detector engine is configured to interpret tapping on the sensing area (06) number six both as a part of said identified symbol and as an order validating the entry of said identified symbol (22).

2. The device according to claim 1, wherein the detector engine is configured to consider that an even number of taps on a target sensing area among the sensing areas number one (01) to five (05) to be equivalent to no tap on said target sensing area.

3. The device according to claim 1, wherein the numerical code consists of a sequence of digits and wherein the detector engine is configured to identify a beginning and an end of the sequence of digits.

4. The device according to claim 3, wherein the detector engine is configured to interpret the very first tap of the sensing area (06) number six as the beginning of the sequence or to interpret a specific gesture applied to the touch sensor as the beginning of the sequence.

5. The device according to claim 3, wherein the detector engine is configured to interpret a start of a waiting phase for detecting touched sensing areas as the beginning of the sequence.

6. The device according to claim 3, wherein the detector engine is configured to interpret tap on the sensing area (06) number six directly subsequent to a entered digit as the end of the sequence or to detect a specific gesture applied to the touch sensor as the end of the sequence.

7. The device according to claim 3, wherein the detector engine is configured to interpret a tap on the sensing area (06) number six greater than a preset time as the end of the sequence or to interpret a double tap on the sensing area (06) number six as the end of the sequence.

8. The device according to claim 3, wherein the detector engine is configured to count a number of entered digits and to consider that the end of sequence is reached as soon as the number of entered digits reaches a predetermined value.

9. The device according to claim 1, wherein the touch sensor faces a user who enters the numerical code.

10. A method for capturing a numerical code in a device (10) comprising a touch sensor (18),
wherein the touch sensor is configured to handle six separate sensing areas (01, ..., 06) numbered according to a Braille matrix;
wherein a detector engine (11) of the device detects a plurality of sequential taps on said sensing areas, identifies which symbol (22) of the Antoine notation corresponds to said plurality of taps, and captures a digit (23) corresponding to said identified symbol; and
**characterised in that**
the detector engine interprets tapping on the sensing area (06) number six both as a part of said identified symbol and as an order validating the entry of said identified symbol.

11. The method according to claim 10, wherein the numerical code consists of a sequence of digits and wherein the detector engine interprets the very first tap of the sensing area (06) number six as a beginning of the sequence of digits or interprets a specific gesture applied to the touch sensor as a beginning of the sequence of digits.

12. The method according to claim 10, wherein the numerical code consists of a sequence of digits and wherein the detector engine interprets a start of a waiting phase for detecting touched sensing areas as a beginning of the sequence of digits.

13. The method according to claim 10, wherein the numerical code consists of a sequence of digits and wherein the detector engine interprets tap on the sensing area (06) number six directly subsequent to a entered digit as an end of the sequence of digits or detects a specific gesture applied to the touch sensor as the end of the sequence of digits.

14. The method according to claim 10, wherein the numerical code consists of a sequence of digits and the detector engine interprets a tap on the sensing area (06) number six greater than a preset time as an end of the sequence of digits or interprets a double tap on the sensing area (06) number six as the end of the sequence of digits.

15. The method according to claim 10, wherein the numerical code consists of a sequence of digits and wherein the detector engine counts a number of entered digits and considers that an end of sequence of digits is reached as soon as the number of entered digits reaches a predetermined value.

## Patentansprüche

1. Vorrichtung (10) zum Erfassen eines numerischen Codes (40), wobei die Vorrichtung einen Berührungssensor (18) umfasst,
wobei der Berührungssensor konfiguriert ist, um sechs separate Erfassungsbereiche (01, ..., 06) zu handhaben, die gemäß der Braille-Matrix nummeriert sind;
wobei die Vorrichtung eine Detektoreinheit (11) umfasst, die konfiguriert ist, um eine Vielzahl von aufeinanderfolgenden Tippvorgängen auf den Erfassungsbereichen zu detektieren, zu identifizieren, welches Symbol (22) der Antoine-Notation der Vielzahl von Tippvorgängen entspricht, und eine Ziffer (23) zu erfassen, die dem identifizierten Symbol (22) entspricht;
**dadurch gekennzeichnet, dass** die Detektoreinheit konfiguriert ist, um das Tippen auf den Erfassungsbereich (06) Nummer sechs sowohl als Teil des identifizierten Symbols als auch als einen Befehl zur Validierung der Eingabe des identifizierten Symbols (22) zu interpretieren.

2. Vorrichtung nach Anspruch 1, wobei die Detektoreinheit konfiguriert ist, um eine gerade Anzahl von Tippvorgängen auf einem Zielerfassungsbereich unter den Erfassungsbereichen Nummer eins (01) bis fünf (05) als äquivalent zu keinem Tippvorgang auf dem Zielerfassungsbereich zu berücksichtigen.

3. Vorrichtung nach Anspruch 1, wobei der numerische Code aus einer Ziffernfolge besteht und wobei die Detektoreinheit konfiguriert ist, um einen Anfang und ein Ende der Ziffernfolge zu identifizieren.

4. Vorrichtung nach Anspruch 3, wobei die Detektoreinheit konfiguriert ist, um das allererste Antippen des Erfassungsbereichs (06) Nummer sechs als den Anfang der Sequenz zu interpretieren oder eine spezifische Geste, die auf den Berührungssensor angewendet wird, als den Anfang der Sequenz zu interpretieren.

5. Vorrichtung nach Anspruch 3, wobei die Detektoreinheit konfiguriert ist, um einen Start einer Wartephase zum Detektieren berührter Erfassungsbereiche als den Anfang der Sequenz zu interpretieren.

6. Vorrichtung nach Anspruch 3, wobei die Detektoreinheit konfiguriert ist, um ein Tippen auf den Erfassungsbereich (06) Nummer sechs direkt im Anschluss an eine eingegebene Ziffer als das Ende der Sequenz zu interpretieren oder eine spezifische Geste, die auf den Berührungssensor angewendet wird, als das Ende der Sequenz zu erfassen.

7. Vorrichtung nach Anspruch 3, wobei die Detektoreinheit konfiguriert ist, um ein Tippen auf den Erfassungsbereich (06) Nummer sechs, das länger als eine voreingestellte Zeit dauert, als das Ende der Sequenz zu interpretieren, oder ein doppeltes Tippen auf den Erfassungsbereich (06) Nummer sechs als das Ende der Sequenz zu interpretieren.

8. Vorrichtung nach Anspruch 3, wobei die Detektoreinheit konfiguriert ist, um eine Anzahl eingegebener Ziffern zu zählen und zu berücksichtigen, dass das Ende der Sequenz erreicht ist, sobald die Anzahl der eingegebenen Ziffern einen vorbestimmten Wert erreicht.

9. Vorrichtung nach Anspruch 1, wobei der Berührungssensor einem Benutzer zugewandt ist, der den numerischen Code eingibt.

10. Verfahren zum Erfassen eines numerischen Codes in einer Vorrichtung (10), umfassend einen Berührungssensor (18),
wobei der Berührungssensor konfiguriert ist, um sechs separate Erfassungsbereiche (01, ..., 06) zu handhaben, die gemäß einer Braille-Matrix nummeriert sind;
wobei eine Detektoreinheit (11) der Vorrichtung eine Vielzahl von aufeinanderfolgenden Tippvorgängen auf den Erfassungsbereichen detektiert, identifiziert, welches Symbol (22) der Antoine-Notation der Vielzahl von Tippeingaben entspricht, und eine Ziffer (23) erfasst, die dem identifizierten Symbol entspricht; und
**dadurch gekennzeichnet, dass** die Detektoreinheit ein Tippen auf den Erfassungsbereich (06) Nummer sechs sowohl als Teil des identifizierten Symbols als auch als einen Befehl zur Validierung der Eingabe des identifizierten Symbols interpretiert.

11. Verfahren nach Anspruch 10, wobei der numerische Code aus einer Ziffernfolge besteht und wobei die Detektoreinheit das allererste Antippen des Erfassungsbereichs (06) Nummer sechs als einen Anfang der Ziffernfolge interpretiert oder eine spezifische Geste, die auf den Berührungssensor angewendet wird, als einen Anfang der Ziffernfolge interpretiert.

12. Verfahren nach Anspruch 10, wobei der numerische Code aus einer Ziffernfolge besteht und wobei die Detektoreinheit einen Start einer Wartephase zum Detektieren berührter Erfassungsbereiche als einen Anfang der Ziffernfolge interpretiert.

13. Verfahren nach Anspruch 10, wobei der numerische Code aus einer Ziffernfolge besteht und wobei die Detektoreinheit ein Tippen auf den Erfassungsbereich (06) Nummer sechs direkt im Anschluss an eine eingegebene Ziffer als ein Ende der Ziffernfolge interpretiert oder eine spezifische Geste, die auf den Berührungssensor angewendet wird, als das Ende der Ziffernfolge detektiert.

14. Verfahren nach Anspruch 10, wobei der numerische Code aus einer Ziffernfolge besteht und die Detektoreinheit ein Tippen auf dem Erfassungsbereich (06) Nummer sechs von mehr als einer voreingestellten Zeit als ein Ende der Ziffernfolge interpretiert oder ein doppeltes Tippen auf den Erfassungsbereich (06) Nummer sechs als das Ende der Ziffernfolge interpretiert.

15. Verfahren nach Anspruch 10, wobei der numerische Code aus einer Ziffernfolge besteht und wobei die Detektoreinheit eine Anzahl eingegebener Ziffern zählt und berücksichtigt, dass ein Ende der Ziffernfolge erreicht ist, sobald die Anzahl der eingegebenen Ziffern einen vorbestimmten Wert erreicht.

## Revendications

1. Dispositif (10) permettant de capturer un code numérique (40), ledit dispositif comprenant un capteur tactile (18),
dans lequel le capteur tactile est configuré pour gérer six zones de détection distinctes (01, ..., 06) numérotées selon la matrice Braille ;
dans lequel le dispositif comprend un moteur de détection (11) configuré pour détecter une pluralité de tapotements séquentiels sur lesdites zones de détection, pour identifier quel symbole (22) de la notation Antoine correspond à ladite pluralité de tapotements, et pour capturer un chiffre (23) correspondant audit symbole identifié (22) ;
**caractérisé en ce que** le moteur de détection est configuré pour interpréter un tapotement sur la zone de détection (06) numéro six à la fois comme faisant partie dudit symbole identifié et comme un ordre validant l'entrée dudit symbole identifié (22).

2. Dispositif selon la revendication 1, dans lequel le moteur de détection est configuré pour considérer qu'un nombre pair de tapotements sur une zone de détection cible parmi les zones de détection numéro un (01) à cinq (05) est équivalent à aucun tapotement sur ladite zone de détection cible.

3. Dispositif selon la revendication 1, dans lequel le code numérique est constitué d'une séquence de chiffres et dans lequel le moteur de détection est configuré pour identifier un début et une fin de la séquence de chiffres.

4. Dispositif selon la revendication 3, dans lequel le moteur de détection est configuré pour interpréter le tout premier tapotement de la zone de détection (06) numéro six comme le début de la séquence ou pour interpréter un geste spécifique appliqué au capteur tactile comme le début de la séquence.

5. Dispositif selon la revendication 3, dans lequel le moteur de détection est configuré pour interpréter un début d'une phase d'attente pour la détection de zones de détection touchées comme le début de la séquence.

6. Dispositif selon la revendication 3, dans lequel le moteur de détection est configuré pour interpréter un tapotement sur la zone de détection (06) numéro six directement après un chiffre entré comme la fin de la séquence ou pour détecter un geste spécifique appliqué au capteur tactile comme la fin de la séquence.

7. Dispositif selon la revendication 3, dans lequel le moteur de détection est configuré pour interpréter un tapotement sur la zone de détection (06) numéro six supérieur à un temps prédéfini comme la fin de la séquence ou pour interpréter un double tapotement sur la zone de détection (06) numéro six comme la fin de la séquence.

8. Dispositif selon la revendication 3, dans lequel le moteur de détection est configuré pour compter un nombre de chiffres entrés et pour considérer que la fin de séquence est atteinte dès que le nombre de chiffres entrés atteint une valeur prédéterminée.

9. Dispositif selon la revendication 1, dans lequel le capteur tactile fait face à un utilisateur qui entre le code numérique.

10. Procédé permettant de capturer un code numérique dans un dispositif (10) comprenant un capteur tactile (18),
dans lequel le capteur tactile est configuré pour gérer six zones de détection distinctes (01, ..., 06) numérotées selon une matrice Braille ;
dans lequel un moteur de détection (11) du dispositif détecte une pluralité de tapotements séquentiels sur lesdites zones de détection, identifie quel symbole (22) de la notation Antoine correspond à ladite pluralité de tapotements, et capture un chiffre (23) correspondant audit symbole identifié ; et
**caractérisé en ce que** le moteur de détection interprète un tapotement sur la zone de détection (06) numéro six à la fois comme faisant partie dudit symbole identifié et comme un ordre validant l'entrée dudit symbole identifié.

11. Procédé selon la revendication 10, dans lequel le code numérique est constitué d'une séquence de chiffres et dans lequel le moteur de détection interprète le tout premier tapotement de la zone de détection (06) numéro six comme un début de la séquence de chiffres ou interprète un geste spécifique appliqué au capteur tactile comme un début de la séquence de chiffres.

12. Procédé selon la revendication 10, dans lequel le code numérique est constitué d'une séquence de chiffres et dans lequel le moteur de détection interprète un début d'une phase d'attente pour détecter des zones de détection touchées comme un début de la séquence de chiffres.

13. Procédé selon la revendication 10, dans lequel le code numérique est constitué d'une séquence de chiffres et dans lequel le moteur de détection interprète un tapotement sur la zone de détection (06) numéro six directement après un chiffre entré comme une fin de la séquence de chiffres ou détecte un geste spécifique appliqué au capteur tactile comme la fin de la séquence de chiffres.

14. Procédé selon la revendication 10, dans lequel le code numérique est constitué d'une séquence de chiffres et le moteur de détection interprète un tapotement sur la zone de détection (06) numéro six supérieur à un temps prédéfini comme une fin de la séquence de chiffres ou interprète un double tapotement sur la zone de détection (06) numéro six comme la fin de la séquence de chiffres.

15. Procédé selon la revendication 10, dans lequel le code numérique est constitué d'une séquence de chiffres et dans lequel le moteur de détection compte un nombre de chiffres entrés et considère qu'une fin de séquence de chiffres est atteinte dès que le nombre de chiffres entrés atteint une valeur prédéterminée.
